# EUROPEAN PATENT APPLICATION

(11) **EP 2 036 442 A1**
(43) Date of publication of application: **18.03.2009**
(21) Application number: 07116600.3
(22) Date of filing: 17.09.2007
(51) Int. Cl.: A23L 1/16

(54) **Fresh pasta and process for the preparation thereof**

(71) Applicant: Nestec S.A., 1800 Vevey (CH)
(72) Inventor: Cestelli, Giacomo, 06016, SANGIUSTINO (PG) (IT); Andersson, Eva, 52037, SANSEPOLCRO (AR) (IT)
(74) Representative: Pesce, Michele

(57) **Abstract**

The fresh pasta has a dough comprising flour, eggs and/or water. The dough further comprises up to 50% of one or more fresh vegetables by weigh of the dough. The process for the preparation of a fresh pasta comprises the steps of mixing and kneading the flour with eggs and/or water realising a dough, sheeting the dough, forming the sheet of dough in order to obtain fresh pasta having the desired shape. The dough in realised by mixing and kneading, in addition to the other ingredients, also fresh vegetables.

## Description

The present invention relates to fresh pasta and to a process for the preparation thereof.

In particular, the present invention refers to pasta having a vegetable or a mixture of vegetables in its dough.

In the following reference will be made to fresh pasta meaning pasta which, after its preparation, is packed in modified atmosphere or frozen.

As known in the art pasta is usually made by mixing together flour, eggs and/or water.

In addition, in order to give the pasta the colour and some taste and flavour of vegetables, it is common to add vegetables in powder form to the dough.

In order to produce pasta having high quality, it is usual to add to the dough small quantities of vegetables in powder form, usually up to 2-5% by weight.

In fact, higher amounts of vegetables would brake down the texture of the pasta and would cause the production of pasta of low quality.

Nevertheless, the pasta produced with vegetables in powder form (because of to the small quantity of vegetables which can be added to the dough) has been found to have a very low or no off-flavours at all.

This is a drawback because the flavour of the vegetables added to the dough of the pasta is very attractive for the consumers.

The technical aim of the present invention is therefore to provide fresh pasta and a process for the preparation thereof by which the said problems of the known art are eliminated.

Within the scope of this technical aim, an object of the invention is to provide fresh pasta and a process for the preparation thereof by which the pasta has a very intensive and lasting flavour of vegetables.

The technical aim, together with these and further objects, are attained according to the invention providing fresh pasta and a process for the preparation thereof in accordance with the accompanying claims.

Advantageously, the pasta according to the invention has very high esthetical properties because there are no sheeting and forming problems when the dough is worked to realise the sheets of pasta and is formed to realise the finished pasta.

Further characteristics and advantages of the invention will be more apparent from the description of a preferred but non-exclusive embodiment of the fresh pasta and the process for the preparation thereof according to the invention.

The fresh pasta has a dough comprising flour, whole eggs and/or water, and up to 50% of one or more fresh vegetables by weigh of the dough.

The fresh vegetables are mixed and kneaded to the other ingredients and are taken in the group consisting of spinach, carrots, peas, tomatoes, zucchini, and so on;

The amount of flour is up to 60% by weigh of the dough and is a cereal flour, preferably taken from the group consisting of durum, semolina, rice flour, alone or in combination with each other.

The amount of eggs is comprised between 0-20% by weigh of the dough while the amount of added water, which is added when preparing the dough, is comprised between 0 - 20% by weigh of the dough.

The water activity is superior to 0.8 and preferably is comprised between 0.8 and 0.955.

In addition, the dough may also comprise starch, gluten, alginate, gums.

The amount of fresh vegetables in the dough is preferably up to 40% and more preferably it is comprised between 20-36% by weigh of the dough.

The present invention also relates to a process for the preparation of fresh pasta.

The process comprises the step of mixing and kneading the flour with whole eggs and/or water and fresh vegetables realising a dough.

When the dough is ready for use, the process provides the step of sheeting the dough.

In a first embodiment of the invention the step of sheeting the dough is carried out by the machine described in Italian patent application IT MC 2003 A 000 151; advantageously using this machine it is not necessary a further step of final adjusting the thickness of the sheet of pasta because this machine is able to sheet the dough at the desired thickness, for example comprised between 0,3-2,0 millimetres.

In a different embodiment the step of sheeting the dough is carried out by a traditional machine different from the above and, after that, the process provides the step of final adjusting the thickness of the sheet of pasta between 0,3-2,0 millimetres.

Finally (after the sheeting step) the process provides the step of forming the sheet of dough to obtain fresh pasta with the desired shape, for example fettuccine, tagliatelle, linguine, and so on, or the fresh pasta may be formed in stuffed food products such as tortelloni or ravioli.

The mix of flour, whole eggs and/or water and fresh vegetables is mixed and kneaded during 20 to 40 minutes in order to realise a mixture including fresh vegetable which is strictly conglobate into the dough. In other words the dough has no big pieces of vegetables which could hinder the sheeting and forming steps, giving products (pasta) of poor aesthetical properties.

Naturally, after the fresh pasta has been formed to the desired shape, it is pasturised and, after that, the fresh pasta is dried to obtain the aw-value required.

After the fresh pasta has been dried, it is cooled and packed in modified atmosphere; finally (after being packed in modified atmosphere) the fresh pasta is stored at +4°C.

In a different embodiment of the invention, after the fresh pasta has been pasturised, it is frozen and packed.

In practice the materials used and the dimensions can be chosen at will according to requirements and to the state of the art.

## Claims

1. Fresh pasta having a dough comprising flour, eggs and/or water, **characterised in that** the dough further comprises one or more fresh vegetables mixed and kneaded to the other ingredients.

2. Fresh pasta according to claim 1, **characterised in that** the fresh vegetable is taken in the group consisting of spinach, carrots, peas, tomatoes, zucchini.

3. Fresh pasta according to any of claims 1 or 2,
**characterised in that** the amount of flour is up to 60% by weigh of the dough.

4. Fresh pasta according to any of claims 1 to 3,
**characterised in that** the flour is a cereal flour, preferably taken from the group consisting of durum, semolina, rice flour, alone or in combination with each other.

5. Fresh pasta according to any of claims 1 to 4,
**characterised in that** the amount of eggs is comprised between 0-20% by weigh of the dough.

6. Fresh pasta according to any of claims 1 to 5,
**characterised in that** the amount of added water, which is added when preparing the dough, is comprised between 0 - 20% by weigh of the dough.

7. Fresh pasta according to any of claims 1 to 6,
**characterised in that** the water activity is superior to 0.8 and preferably is comprised between 0.8 and 0.955.

8. Fresh pasta according to any of claims 1 to 7,
**characterised in that** the dough also comprises starch, gluten, alginate, gums.

9. Fresh pasta according to any of claims 1 to 8, the amount of fresh vegetables in the dough is up to 50%, preferably up to 40% and more preferably it is comprised between 20-36% by weigh of the dough.

10. A process for the preparation of a fresh pasta, comprising the following steps:
- mixing and kneading flour with eggs and/or water realising a dough;
- sheeting the dough;
- forming the sheet of dough in order to obtain fresh pasta having the desired shape,
**characterised in that** the dough in realised by mixing and kneading, in addition to the other ingredients, also fresh vegetables.

11. A process according to claim 10, **characterised by** further comprising the step of final adjusting the thickness of the sheet of pasta.

12. A process according to claim 10, **characterised in that** the mix of flour, eggs and/or water and fresh vegetables is mixed and kneaded during 20 to 40 minutes.

13. A process according to claim 10 and onwards,
**characterised by** pasturising the fresh pasta after it has been formed to the desired shape.

14. A process according to claim 13, **characterised by** drying the fresh pasta to obtain the aw-value required, after it has been pasturised.

15. A process according to claim 14, **characterised by** cooling and packing the fresh pasta, after it has been dryed.

16. A process according to claim 15, **characterised in that** the fresh pasta is packed in modified atmosphere.

17. A process according to claim 16, **characterised in that** the fresh pasta is stored at +4°C after being packed in modified atmosphere.

18. A process according to claim 13, **characterised in that**, after the fresh pasta has been pasturised, it is frozen and packed.

19. A process according to claim 10 and onwards,
**characterised in that** the fresh pasta is formed in fettuccine, tagliatelle, linguine, or in stuffed food products such as tortelloni or ravioli.

20. A process according to claim 10 and onwards,
**characterised in that** the amount of fresh vegetables in the dough is up to 50%, preferably up to 40% and more preferably it is comprised between 20-36% by weigh of the dough.
